# FASCICULE DE BREVET EUROPEEN

(11) **EP 2 222 507 B1**
(45) Date de publication et mention de la délivrance du brevet: **27.06.2012**
(21) Numéro de dépôt: 08863845.7
(22) Date de dépôt: 26.09.2008
(51) Int. Cl.: B60R 16/02

(54) **SUPPORT D'UN OU DE PLUSIEURS ELEMENTS DESTINES A ETRE FIXE SUR UNE STRUCTURE DE VEHICULE AUTOMOBILE**
TRÄGER FÜR EIN ODER MEHRERE ELEMENTE ZUR BEFESTIGUNG AN EINEM KRAFTFAHRZEUGAUFBAU
A SUPPORT FOR ONE OR MORE ELEMENTS WHICH ARE INTENDED TO BE FASTENED TO A MOTOR VEHICLE STRUCTURE

(30) Priorité: 20.12.2007 FR 0760105
(43) Date de publication de la demande: 01.09.2010
(73) Titulaire: Renault s.a.s., 92100 Boulogne-Billancourt (FR)
(72) Inventeur: BILLARD, Xavier, F-78990 Elancourt (FR); JOUENARD, Eric, F-78370 Plaisir (FR); NICOD, Pascal, F-78330 Fontenay-Le-Fleury (FR)
(86) Numéro de dépôt international: PCT/FR2008/051728
(87) Numéro de publication internationale: WO 2009/080921

(56) Documents cités:
- EP-A- 1 415 863
- FR-A- 2 897 808
- US-A- 5 846 091
- US-A- 6 062 633

## Description

### DOMAINE TECHNIQUE

La présente invention se rapporte à un support d'un ou plusieurs éléments destiné(s) à être fixé sur une structure de véhicule automobile afin de les supporter le long de cette structure. Plus précisément, la structure est un pied avant de véhicule automobile et les éléments sont des câbles électriques, des connecteurs électriques, des commandes ou autres.

Il est à noter que le mot "câble" utilisé dans la présente demande doit être pris dans son sens le plus large, c'est-à-dire qu'il désigne indifféremment un câble électrique, un toron formé de plusieurs conducteurs électriques associés, un câble mixte comprenant une ou plusieurs fibres optiques et un ou plusieurs conducteurs électriques, une fibre optique ou un ensemble de fibres optiques, ou même un tuyau rigide ou semi-rigide servant à véhiculer un fluide.

Il est à noter aussi que le mot « pied avant » utilisé dans la présente demande désigne une structure métallique participant à la résistance de la carrosserie, située à l'avant de chacun des côtés de la caisse d'un véhicule, et qui supporte les charnières d'une portière avant. Le pied avant sert de structure porteuse pour certaines poutres du véhicule.

Dans un véhicule automobile, une série de câbles électriques est utilisée pour assurer l'alimentation, la distribution électrique et la transmission de données pour et vers les organes constitutifs du moteur. Les nouveaux standards d'implantation des connecteurs électriques contraignent les constructeurs automobiles à implanter les connecteurs sur le pied avant des véhicules. La qualité et la sûreté souhaitée pour les raccordements électriques ont considérablement augmenté le nombre de connecteurs à implanter.

La zone pied avant étant très exiguë, l'implantation et la fixation des éléments de la zone est fortement compromise. Cette zone comprend généralement la commande pour l'ouverture du capot avant permettant d'avoir accès au moteur, les fixations de la garniture pied avant, les passages des câbles, les raccordements électriques avant arrière, optionnels et le trou de passage de la dérivation électrique d'une porte avant. Cette zone est réputée difficile en terme de montage, ainsi qu'en architecture.

### ETAT DE LA TECHNIQUE ANTERIEURE

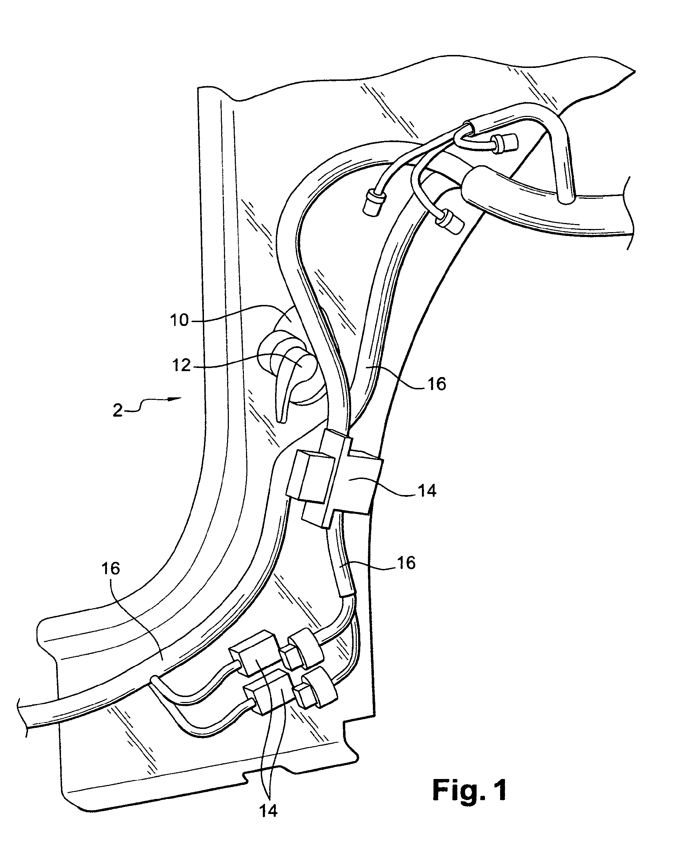

La figure 1 illustre d'ailleurs la situation actuelle au niveau du pied avant 2 : on y retrouve le trou de passage 10 de la dérivation électrique d'une porte avant, la commande pour l'ouverture du capot 12, des connecteurs électriques 14, des câbles 16 entre autres.

Actuellement les éléments de la zone pied avant sont fixés directement sur la tôle généralement dans l'ordre suivant, chaque étape étant susceptible de provoquer des risques de déconnexion, d'endommagement et de rupture des câbles. Notamment les étapes sont :
1) passage de la dérivation électrique de la porte dans le trou de tôlerie 10 et mise en place d'un obturateur associé,
2) fixation des dérivations de câblage et des connecteurs électriques sur la tôle par des agrafes. A cette étape, l'opérateur peut inverser les parcours et ainsi provoquer un défaut de qualité.
3) mise en place de la commande du capot avant et vissage avec compression des câblages déjà mis en place. Ceci représente un risque de bruyance et d'augmentation de l'effort de manoeuvre de la commande ouverture capot, le câble étant contraint ou tordu.
4) mise en place d'un tapis destiné à l'habitacle, le tapis ne disposant pas de moyen de mise en géométrie. Ceci présente donc un effort supplémentaire à l'opérateur pour éviter que le tapis ne se déplace en cours de montage.
5) mise en place de l'habillage du pied avant avec manipulation des câblages déjà en place afin de dégager les points de fixation prévus. A ce stade, il y a un risque de défaut de qualité et un risque de bruyance.

La mise en géométrie de l'habillage de pied avant est difficile à assurer car il est fixé par des plots de fixation longs issus directement de l'habillage permettant l'empilage des éléments précédents.

Le document EP 1 415 863 A1 décrit un support d'un ou plusieurs éléments, destiné à être fixé sur une structure d'un véhicule automobile afin de supporter les éléments le long de ladite structure, le support comportant:
- au moins un moyen de guidage et de maintien de câbles,
- au moins un moyen de fixation d'une garniture de ladite structure, et
- au moins un moyen d'indexage d'un tapis.

### EXPOSE DE L'INVENTION

Ainsi, l'invention propose de surmonter tous les inconvénients précités en offrant un aménagement de la zone de pied avant amélioré par rapport à l'art antérieur. Un opérateur de montage ayant sa tache facilitée par l'utilisation du support selon l'invention.

L'invention atteint son but grâce à un support d'un ou plusieurs éléments destiné(s) à être fixé sur un pied avant d'un véhicule automobile afin de les supporter le long de ladite structure caractérisé en ce que le support comporte :
- au moins un moyen de guidage et de maintien de câbles,
- au moins un moyen de fixation d'une garniture de ladite structure,
- au moins un moyen d'indexage d'un tapis, et
- au moins un moyen de fixation d'un connecteur électrique.

Avantageusement, l'invention peut également présenter une ou plusieurs des caractéristiques suivantes :
o le support peut comporter, en outre, des moyens de réception d'une commande apte à ouvrir le capot avant d'un véhicule,
o les moyens de réception de la commande d'ouverture du capot peuvent être disposées sur la partie supérieure du support de manière à minimiser les contraintes environnementales avec les autres éléments,
o le moyen de guidage et de maintien de câble peut être réalisé sous la forme d'une gorge sensiblement en forme de « U »,
o une extrémité d'une branche dudit « U » peut comporter une plaque montée mobile en rotation autour d'un axe de manière à ce que la plaque passe d'une position ouverte dans laquelle la gorge est ouverte pour pouvoir insérer un câble à une position fermée dans laquelle la plaque ferme la gorge pour maintenir ledit câble en position,
o le moyen d'indexage d'un tapis peut se présenter sous la forme d'un cylindre en saillie par rapport à la surface de base du support sur lequel on vient positionner géométriquement le tapis avant sa mise en place définitive,
o les moyens de fixation d'une garniture de ladite structure peuvent être disposés latéralement sur le support,
o les moyens de fixation d'une garniture de ladite structure peuvent se présenter sous la forme d'encoches apte à recevoir un élément correspondant provenant de la garniture telle qu'un doigt de fixation, ledit doigt de fixation étant adapté pour la fixation de ladite garniture,
o les moyens de guidage des câbles ainsi que les connecteurs associés audits câbles peuvent comporter un moyen d'identification similaire de manière à favoriser la bonne disposition des câbles et des connecteurs dans leur moyen de guidage associé sur le support,
o le moyen d'identification peut être visuel et peut être, par exemple, une couleur,
o il peut se positionner au niveau de la partie inférieure du pied avant,
o il peut être réalisé dans un matériau organique de synthèse tel que le polypropylène.

### BREVE DESCRIPTION DES FIGURES

D'autres caractéristiques et avantages de l'invention apparaîtront clairement à la lecture de la description suivante, en liaison avec les figures annexées dans lesquelles :
- la figure 1 représente une vue en perspective d'une antériorité représentant la partie inférieure d'un pied avant de véhicule automobile,
- la figure 2 représente une vue en perspective du support selon l'invention destiné à être fixé sur le pied avant d'un véhicule automobile, et
- la figure 3 représente une vue en perspective du support selon l'invention fixé sur le pied avant d'un véhicule automobile.

### EXPOSE DETAILLE DE MODES DE REALISATION PREFERES

Dans la description qui va suivre, des éléments identiques, similaires ou analogues seront désignés par les mêmes chiffres de référence.

Par ailleurs, pour l'ensemble des figures et dans l'ensemble de la description qui suit, une même notation désigne le même élément. De même, dans ce qui suit, on désignera par « supérieure» une face d'un élément orienté verticalement vers le haut du véhicule, c'est-à-dire vers le dessous de l'assise du siège et par « inférieure » toute face opposée à ladite face « supérieure ».

La description suivante se limite au pied avant équipant la partie gauche d'un véhicule automobile, par rapport au conducteur du véhicule, sachant que le pied avant droit correspond au symétrique du pied avant gauche par rapport au plan de symétrie naturel de la structure du véhicule et donc par conséquent à un support multifonction destiné à être fixé sur ce pied avant.

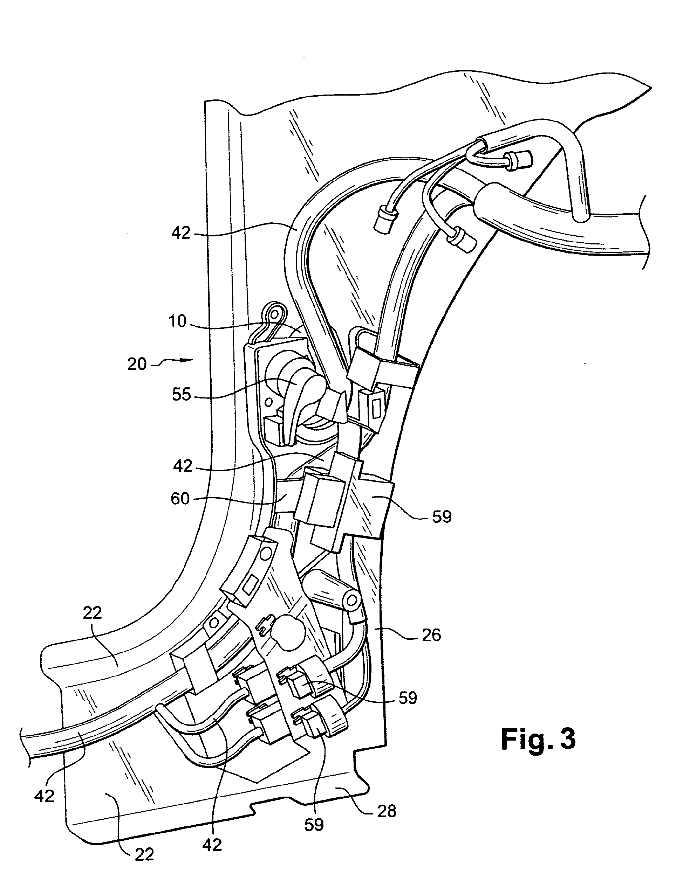

Le pied avant 20, tel que représenté sur la figure 3, est réalisé préférentiellement en une unique pièce de fonderie de métal léger, notamment de l'aluminium, ou d'alliage de métaux légers, notamment un alliage d'aluminium. Il se compose d'un corps central qui a sensiblement la forme d'un " L " et une section d'allure générale en " U ". La branche du " L " est composée par une paroi de base 22, des première 24 et deuxième 26 parois latérales. Le pied du " L " est constitué par le prolongement de la paroi de base 22 et de la première paroi latérale 24, ainsi que par une troisième paroi latérale 28.

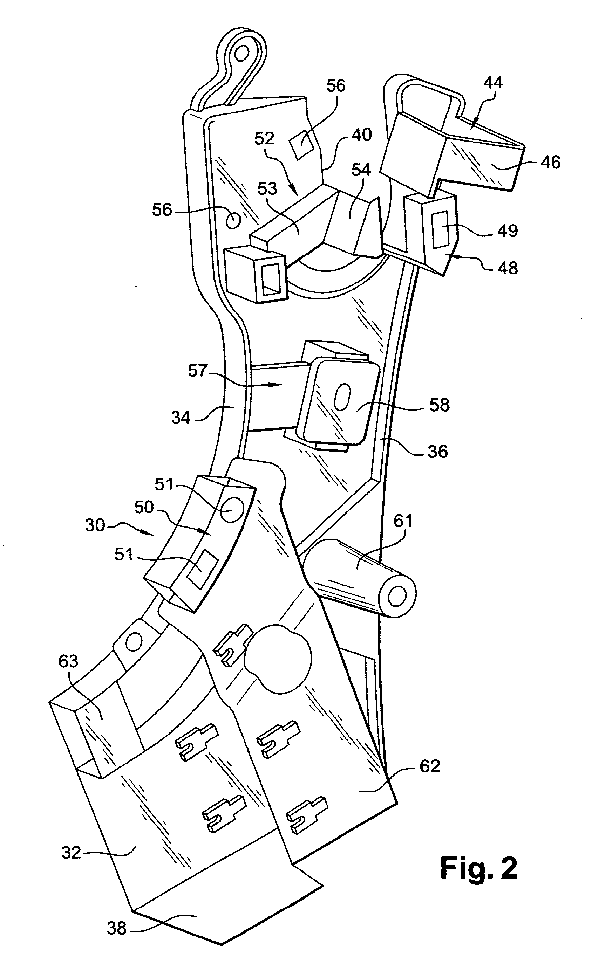

Le support 30 selon l'invention et illustré sur la figure 2 possède sensiblement la même forme et vient se fixer par des moyens connus de l'homme du métier au niveau de la zone inférieure du pied avant 20. Notamment, il présente un corps central qui a sensiblement la forme d'un " L " et une section d'allure générale en " U ". Les dimensions du corps central étant inférieures aux dimensions du pied avant 20 selon notre mode de réalisation illustré sur la figure 3. La branche du " L " est composée par une paroi de base 32, des première 34 et deuxième 36 parois latérales. Le pied du " L " est constitué par le prolongement de la paroi de base 32 et de la première paroi latérale 34, ainsi que par une troisième paroi latérale 38.

Dans la moitié supérieure, le support 30 comporte un découpage central 40 sensiblement en forme de « U » de manière à s'adapter à l'environnement structurel du pied avant 20 et divisant l'extrémité supérieure du support en deux parties.

La première partie adjacente à la paroi 36 comporte un moyen de guidage et de maintien de câble. Il se présente sous la forme d'une gorge 44 sensiblement en forme de « U » en saillie par rapport à la paroi de base 32 dont une extrémité d'une branche dudit « U » comporte une plaque 46 montée mobile en rotation autour d'un axe de manière à ce que la plaque passe d'une position ouverte dans laquelle la gorge est ouverte pour pouvoir insérer le câble à une position fermée dans laquelle la plaque ferme la gorge pour maintenir le câble 42 en position.

Agencé sous cette gorge 44, se trouve un moyen de fixation 48 d'une garniture (non représentée) de pied avant gauche. A titre explicatif, une garniture est une pièce en plastique permettant de rendre plus esthétique l'habitacle d'un véhicule, la garniture précitée étant apte à masquer en partie tous les éléments disposés sur le support 30. Le moyen de fixation 48 se présente sous la forme d'une encoche 49 apte à recevoir un élément correspondant (non représenté) provenant de la garniture tel qu'un doigt de blocage en force dans l'encoche, ledit doigt de fixation étant adapté pour la fixation de ladite garniture. Un autre moyen de fixation de la garniture est agencé sur ce support et plus précisément dans la zone coudé du « L ». Il comporte deux encoches distinctes 51 apte à recevoir elles aussi un doigt de blocage en force de la garniture dans chacune des encoches 51 du support. Ainsi, les moyens de fixation 48, 50 de la garniture sont disposés latéralement sur le support 30.

La seconde partie adjacente à la paroi 34 comporte un moyen de guidage et de maintien 52 d'un câble 42 présentant un socle 53 et une paroi 54 en saillie par rapport à la surface du socle. La paroi 54 guidant ainsi le câble sur le support 30.

Au dessus du moyen 52 sont disposées des moyens de réception de la commande 55 de l'ouverture du capot (non représenté) avant d'un véhicule. Traditionnellement, cette commande 55 est réalisée sous la forme d'une manette sensiblement en forme de « croissant » que l'on doit tirer vers soi pour déclencher à l'aide d'un câble l'ouverture du capot. Les moyens de réception selon notre mode de réalisation sont des encoches 56 de réception des éléments constituant la commande. Plus précisément, une des encoches comporte un écrou. L'écrou peut aussi être moulé dans le support. Les deux encoches 56 sont disposées de part et d'autre de la seconde partie adjacente à la paroi 34. Avantageusement, une disposition en hauteur de la commande d'ouverture du capot permet d'éviter des contraintes environnementales qui sont des contraintes dues aux câblages électriques qui peuvent tordre ou engendrer des efforts de manoeuvre importants du câble permettant l'ouverture du capot. Par ailleurs, la disposition en hauteur de la commande d'ouverture du capot permet d'éviter la bruyance dur au débattement du câble permettant l'ouverture du capot sur les câbles électriques environnants.

Enfin, dans cette moitié supérieure du support se trouve un moyen de guidage et de maintien 57 de câble 42 couplé à un moyen de fixation 58 de connecteur électrique 59. Les deux moyens 57 et 58 étant adjacents et disposé sous la découpe 40. Le moyen de guidage et de maintien 57 tel que précédemment décrit se présente sous la forme d'une gorge apte à être fermée à l'aide d'une plaque 60. La figure 3 illustre bien que le câble 42 est maintenu en position sous la plaque 60.

A la jonction entre la moitié supérieure et la moitié inférieure du support 30, sensiblement centré par rapport à la structure générale du support, se trouve un moyen d'indexage 61 d'un tapis (non représenté). Le tapis énoncé ci-dessus est celui apte à être disposé au niveau de l'emplacement d'un conducteur et recouvrira donc le plancher associé à l'emplacement du conducteur. Ce moyen 61 se présente sous la forme d'un tube en saillie par rapport à la paroi principale 32 du support. La forme est choisie de telle manière qu'elle ne prenne le moins de place possible sur le support pour ne pas gêner le passage des différents éléments maintenus sur le support. L'extrémité libre du tube présente un évidemment de forme ronde pour accueillir un élément d'indexage du tapis, par exemple un doigt de blocage.

Un opérateur devra donc positionner un doigt de blocage associé au tapis dans l'évidement du tube 61 pour pouvoir assurer son maintien géométrique avant sa fixation définitive.

Dans la moitié inférieure du support 30, de nombreux moyens 58 de fixation de connecteurs électriques 59 sont agencés. Plus précisément, une plaque 62 disposée entre la zone coudée du « L » (zone où se trouve aussi les moyens de fixation 50 de la garniture) et la troisième paroi latérale 38. Par exemple, selon notre mode de réalisation, trois connecteurs 59 peuvent être fixés sur la plaque 62. La plaque possède ainsi une première fonction de support de connecteurs et assure aussi une fonction supplémentaire de maintien de câble. En effet, la plaque 62 est décalée en hauteur par rapport à la paroi de base 32 de manière à libérer un espace suffisant pour y disposer des câbles 42 et les maintenir en position sous elle. Des moyens de fixation 58 supplémentaires sont disposés au niveau de la paroi principale 32 du support 30 en contre bas de la plaque 62. Il est à noter que les moyens de fixation des connecteurs 59 sont constitués par tous les moyens connus de l'homme du métier pour fixer un connecteur électrique sur une surface.

Enfin, au niveau de l'extrémité inférieure du support, un moyen de guidage et de maintien 63 adjacent à la paroi 34 présente, de manière similaire au moyen de guidage et de maintien 42, la forme d'une gorge sensiblement en forme de « U » en saillie par rapport à la paroi de base 32 dont une extrémité d'une branche dudit « U » comporte une plaque 63 montée mobile en rotation autour d'un axe de manière à ce que la plaque passe d'une position ouverte dans laquelle la gorge est ouverte pour pouvoir insérer le câble à une position fermée dans laquelle la plaque ferme la gorge pour maintenir le câble 42 en position maintenue.

Ainsi, les différents éléments présents dans la zone du pied avant sont répartis sur toute la hauteur du support de manière à éviter les contraintes et les interférences avec l'environnement.

Ainsi, un opérateur souhaitant utiliser le support selon l'invention montera les différents éléments dans cet ordre :
1) passage de la dérivation électrique de la porte dans le trou de tôlerie 10 et mise en place d'un obturateur associé,
2) fixation des dérivations de câblage et des connecteurs électriques dans les gorges prévues. Les gorges contenant les câbles ainsi que les connecteurs associés auxdits câbles comportent un moyen d'identification similaire de manière à favoriser la bonne disposition des câbles et des connecteurs dans leur gorge associée sur le support. Le moyen d'identification peut, par exemple, être visuel, tel qu'un code couleur.
3) mise en place de la commande du capot avant en hauteur afin d'éviter les contraintes environnementales et la bruyance,
4) mise en place d'un tapis destiné à l'habitacle. Ceci présente donc l'avantage d'éviter que le tapis ne se déplace en cours de montage et facilite donc la tâche de l'opérateur.
6) mise en place de l'habillage du pied avant avec des moyens de fixation maîtrisé et décalés en hauteur. Ceci permettant d'éviter l'utilisation de plots de fixation longs issus directement de l'habillage et permettant l'empilage des éléments précédents ainsi que les risques de bruyance et de défaut de qualité.

La présente invention n'est nullement limitée au mode de réalisation décrit et illustré qui n'a été donné qu'à titre d'exemple. Au contraire, l'invention comprend tous les équivalents techniques des moyens décrits ainsi que leur combinaison si celles-ci sont effectuées suivant son esprit.

Ainsi, la disposition des différentes fonctions du support peut être différente dans le cas où le pied avant du véhicule est soumis à une répartition des contraintes différente.

Le support selon l'invention permet donc un aménagement optimisé des éléments se trouvant à proximité d'un pied avant de véhicule automobile, de manière à faciliter le montage, d'optimiser le temps de montage, d'améliorer la bruyance du véhicule, les risques de déconnexion, d'endommagements, de rupture des câbles ainsi que la qualité géométrique globale du pied avant.

## Revendications

1. Support (30) d'un ou plusieurs éléments destiné(s) (42, 49, 55) à être fixé sur un pied avant (20) d'un véhicule automobile afin de les supporter le long de ladite structure, le support (30) comportant :
- au moins un moyen de guidage et de maintien (44, 46, 52, 53, 54, 57, 63) de câbles (42),
- au moins un moyen de fixation (48, 49, 50) d'une garniture de ladite structure,
- au moins un moyen d'indexage (61) d'un tapis, et
- au moins un moyen de fixation (62) d'un connecteur électrique.

2. Support selon la revendication 1, **caractérisé en ce que** le support (30) comporte, en outre, des moyens de réception (56) d'une commande (55) apte à ouvrir le capot avant d'un véhicule.

3. Support selon la revendication 2, **caractérisé en ce que** les moyens de réception de la commande d'ouverture du capot sont disposées sur la moitié supérieure du support de manière à minimiser les contraintes environnementales avec les autres éléments.

4. Support selon la revendication 1, **caractérisé en ce que** le moyen de guidage et de maintien (44, 46, 52, 53, 54, 57, 63) de câble est réalisé sous la forme d'une gorge (44) sensiblement en forme de « U ».

5. Support selon la revendication 4, **caractérisé en ce qu'**une extrémité d'une branche dudit « U » comporte une plaque (46, 60) montée mobile en rotation autour d'un axe de manière à ce que la plaque passe d'une position ouverte dans laquelle la gorge est ouverte pour pouvoir insérer un câble à une position fermée dans laquelle la plaque ferme la gorge pour maintenir ledit câble en position.

6. Support selon la revendication 1, **caractérisé en ce que** le moyen d'indexage (61) d'un tapis se présente sous la forme d'un cylindre en saillie par rapport à la surface de base (32) du support sur lequel on vient positionner géométriquement le tapis avant sa mise en place définitive.

7. Support selon la revendication 1, **caractérisé en ce que** les moyens de fixation (48, 49, 50) d'une garniture de ladite structure sont disposés latéralement sur le support.

8. Support selon la revendication 7, **caractérisé en ce que** les moyens de fixation (50, 48) d'une garniture de ladite structure se présentent sous la forme d'encoches (49, 51) apte à recevoir un élément correspondant provenant de la garniture telle qu'un doigt de fixation, ledit doigt de fixation étant adapté pour la fixation de ladite garniture.

9. Support selon la revendication 1, **caractérisé en ce que** les moyens de guidage (44, 46, 52, 53, 54, 57, 63) des câbles ainsi que les connecteurs (59) associés audits câbles comportent un moyen d'identification similaire de manière à favoriser la bonne disposition des câbles et des connecteurs dans leur moyen de guidage associé sur le support.

10. Support selon la revendication 9, **caractérisé en ce que** le moyen d'identification est visuel et est, par exemple, une couleur.

11. Support selon l'une des revendications précédentes, **caractérisé en ce qu'**il se positionne au niveau de la partie inférieure du pied avant.

12. Support selon l'une des revendications précédentes, **caractérisé en ce qu'**il est réalisé dans un matériau organique de synthèse tel que le polypropylène.

## Claims

1. Support (30) for one or more element(s) (42, 49, 55) intended to be fastened to a motor vehicle front hinge pillar (20) in order to support them along said structure, the support (30) comprising:
- at least one cable (42) guiding and holding means (44, 46, 52, 53, 54, 57, 63),
- at least one fastening means (48, 49, 50) for securing a trim of said structure,
- at least one indexing means (61) for indexing a carpet, and
- at least one fastening means (62) for securing an electrical connector.

2. Support according to Claim 1, **characterized in that** the support (30) further comprises accepting means (56) for accepting a control (55) for opening the hood at the front of a vehicle.

3. Support according to Claim 2, **characterized in that** the accepting means that accept the hood-opening control are positioned on the upper half of the support so as to minimize environmental constraints with the other elements.

4. Support according to Claim 1, **characterized in that** the cable guiding and holding means (44, 46, 52, 53, 54, 57, 63) is produced in the form of a substantially U-shaped groove (44).

5. Support according to Claim 4, **characterized in that** one end of one leg of said U comprises a plate (46, 60) mounted such that it can rotate about an axis so that the plate moves from an open position in which the groove is open so that a cable can be inserted into a closed position in which the plate closes the groove in order to hold said cable in position.

6. Support according to Claim 1, **characterized in that** the carpet indexing means (61) is in the form of a cylinder projecting from the base surface (32) of the support on which the carpet is geometrically positioned before it is definitively fitted.

7. Support according to Claim 1, **characterized in that** the fastening means (48, 49, 50) for securing a trim of said structure are positioned laterally on the support.

8. Support according to Claim 7, **characterized in that** the fastening means (50, 48) for securing a trim of said structure are in the form of recesses (49, 51) able to accept a corresponding element stemming from the trim such as a fastening finger, said fastening finger being designed to secure said trim.

9. Support according to Claim 1, **characterized in that** the cable guiding means (44, 46, 52, 53, 54, 57, 63) and the connectors (59) associated with said cables have a similar means of identification so as to encourage the correct layout of the cables and of the connectors in their associated guide means on the support.

10. Support according to Claim 9, **characterized in that** the means of identification is a visual one and, for example, is a color.

11. Support according to one of the preceding claims, **characterized in that** it is positioned at the lower part of the front hinge pillar.

12. Support according to one of the preceding claims, **characterized in that** it is made of a synthetic organic material such as polypropylene.

## Patentansprüche

1. Halter (30) eines oder mehrerer Elemente (42, 49, 55), das/die dazu bestimmt ist/sind, an einer A-Säule (20) eines Kraftfahrzeugs befestigt zu werden, um sie entlang der Struktur zu halten, wobei der Halter (30) aufweist:
- mindestens eine Führungs- und Halteeinrichtung (44, 46, 52,53, 54, 57,63) für Kabel (42),
- mindestens eine Befestigungseinrichtung (48, 49, 50) einer Verkleidung der Struktur,
- mindestens eine Indexiereinrichtung (61) eines Teppichs, und
- mindestens eine Befestigungseinrichtung (62) eines elektrischen Verbinders.

2. Halter nach Anspruch 1, **dadurch gekennzeichnet, dass** der Halter (30) außerdem Aufnahmeeinrichtungen (56) einer Steuerung (55) aufweist, die die Motorhaube eines Fahrzeugs öffnen kann.

3. Halter nach Anspruch 2, **dadurch gekennzeichnet, dass** die Aufnahmeeinrichtungen der Öffnungssteuerung der Motorhaube in der oberen Hälfte des Halters angeordnet sind, um die Umgebungseinschränkungen der anderen Elemente zu minimieren.

4. Halter nach Anspruch 1, **dadurch gekennzeichnet, dass** die Kabelführungs- und Halteeinrichtung (44, 46, 52, 53, 54, 57, 63) in Form einer im Wesentlichen "U"-förmigen Rille (44) hergestellt ist.

5. Halter nach Anspruch 4, **dadurch gekennzeichnet, dass** ein Ende eines Schenkels des "U" eine Platte (46, 60) aufweist, die drehbeweglich um eine Achse montiert ist, so dass die Platte von einer offenen Stellung, in der die Rille offen ist, um ein Kabel einführen zu können, in eine geschlossene Stellung übergeht, in der die Platte die Rille schließt, um das Kabel in Stellung zu halten.

6. Halter nach Anspruch 1, **dadurch gekennzeichnet, dass** die Indexiereinrichtung (61) eines Teppichs in Form eines Zylinders vorliegt, der bezüglich der Basisfläche (32) des Halters vorsteht, auf dem der Teppich vor seiner endgültigen Verlegung geometrisch positioniert wird.

7. Halter nach Anspruch 1, **dadurch gekennzeichnet, dass** die Befestigungseinrichtungen (48, 49, 50) einer Verkleidung der Struktur seitlich auf dem Halter angeordnet sind.

8. Halter nach Anspruch 7, **dadurch gekennzeichnet, dass** die Befestigungseinrichtungen (50, 48) einer Verkleidung der Struktur in Form von Aussparungen (49, 51) vorliegen, die ein von der Verkleidung kommendes, entsprechendes Element wie einen Befestigungsfinger aufnehmen können, wobei der Befestigungsfinger für die Befestigung der Verkleidung geeignet ist.

9. Halter nach Anspruch 1, **dadurch gekennzeichnet, dass** die Führungseinrichtungen (44, 46, 52, 53, 54, 57, 63) der Kabel sowie die den Kabeln zugeordneten Verbinder (59) eine gleichartige Identifizierungseinrichtung aufweisen, um die richtige Anordnung der Kabel und der Verbinder in ihrer zugeordneten Führungseinrichtung auf dem Halter zu unterstützen.

10. Halter nach Anspruch 9, **dadurch gekennzeichnet, dass** die Identifizierungseinrichtung visuell und zum Beispiel eine Farbe ist.

11. Halter nach einem der vorhergehenden Ansprüche, **dadurch gekennzeichnet, dass** er im Bereich des unteren Teils der A-Säule positioniert wird.

12. Halter nach einem der vorhergehenden Ansprüche, **dadurch gekennzeichnet, dass** er aus einem organischen Synthesematerial wie Polypropylen hergestellt ist.
